# EUROPÄISCHE PATENTANMELDUNG

(11) **EP 1 548 353 A2**
(43) Veröffentlichungstag der Anmeldung: **29.06.2005**
(21) Anmeldenummer: 04012005.7
(22) Anmeldetag: 21.05.2004
(51) Int. Cl.: F21S 8/00, F21V 14/02, F21V 14/06, G02B 3/08

(54) **Optische Anordnung mit Stufenlinse**

(30) Priorität: 22.12.2003 DE 10361121
(71) Anmelder: SCHOTT AG, 55122 Mainz (DE)
(72) Erfinder: Kittelmann, Rüdiger, 37574 Einbeck (DE); Wagener, Harry, 31061 Alfeld (DE)
(74) Vertreter: Herden, Andreas, Dipl.-Ing.

(57) **Zusammenfassung**

Um eine optische Anordnung mit eine Fresnel- oder Stufenlinse in deren optischen Eigenschaften vielfältiger gestaltbar zur Verfügung zu stellen, ist eine Streuscheibe, vorzugsweise mit angepasstem vordefiniertem Streuverhalten vorgesehen.

## Beschreibung

Die Erfindung betrifft eine optische Anordnung mit zumindest einer Stufenlinse.

Stufen- oder Fresnellinsen gehen auf den französischen Physiker Augustin Jean Fresnel zurück, welcher bereits im neunzehnten Jahrhundert dieses auch als Ringlinse bezeichnete optische Element schuf. Stufen- oder Fresnellinsen weisen, im Gegensatz zu den ansonsten verwendeten optischen Linsen mit Vollkörper konzentrische, im Wesentlichen senkrecht zur Hauptebene der Linse angeordnete Stufen auf, zwischen welchen sich ringförmige Abschnitte befinden. Die optisch wirksamen Oberflächen der ringförmigen Abschnitte entsprechen in ihrer Form in etwa der Form von Oberflächenabschnitten einer normalen Linse mit vollem Körper, liegen aber wesentlich näher an der gegenüberliegenden Oberfläche der jeweiligen Linse. Ferner werden die optisch im Wesentlichen nicht wirksamen Flächen der Stufen möglichst parallel zur Hauptlichtausbreitungsrichtung angeordnet, um möglichst geringe Reflexionen oder wenig unerwünschtes Streulicht zu erzeugen. Daher weist eine Fresnellinse näherungsweise, bis auf durch die Stufen hervorgerufene Störungen, ähnliche Abbildungseigenschaften wie eine normale Linse auf. Trotz dieser Störungen hat die Fresnellinse jedoch wesentliche Vorteile gegenüber herkömmlichen Linsen, welche diesen Linsentyp bei vielen Anwendungen zur deutlich bevorzugten oder auch zur einzig möglichen Wahl werden lässt. Fresnellinsen weisen eine geringere Dicke auf, benötigen weniger an optischem Material, sind folglich leichter und haben eine geringere Absorption und somit auch eine geringere Aufheizung insbesondere bei deren Verwendung in lichttechnischen Einrichtungen mit hohen Lichtintensitäten.

Sehr vorteilhaft werden Fresnellinsen beispielsweise bei Stufenscheinwerfern für Theater, Bühne, Studio, Film oder auch für architektonische Beleuchtungszwecke verwendet.

Durch die geringere Dicke der Fresnellinsen ist aber auch deren Herstellung oftmals wesentlich einfacher. Für das Prägen, Spritzgiessen oder Heissformen ist eine dünnere Fresnellinse in deren Abkühl- und Entformungsverhalten wesentlich besser zu beherrschen als deren Gegenstück mit vollem Volumen. Mit zunehmender Grösse dieser Linsen fallen diese Vorteile um so mehr ins Gewicht. Folglich sind bevorzugte Anwendungsgebiete die Beleuchtungstechnik, insbesondere im Theater, Studio, insbesondere für den Film auf der Bühne sowie in der Architektur, bei welchen eine hohe Lichtmenge häufig auch eine hohe thermische Belastung mit sich bringt aber Störungen der Abbildungseigenschaften weniger stark ins Gewicht fallen.

Aus der Signaltechnik des schienengeführten Verkehrs ist eine Stufenlinse mit einer zentral angeordneten, das Licht vorzugsweise in den unteren Halbraum richtenden parallelen Prismenanordnung bekannt, welche dazu verwendet wird, einen Teil des in die Stufenlinse eintretenden Lichts für die Signalerkennbarkeit im Nahbereich zur Verfügung zu stellen.

Der Erfindung liegt die Aufgabe zu Grunde, eine Stufenlinse in deren Verwendbarkeit, insbesondere für lichttechnische Anwendungen weiter zu verbessern.

Diese Aufgabe wird auf überraschend einfach Weise mit den Merkmalen des Anspruchs 1 gelöst.

Mit dem erfindungsgemässen, das Licht streuenden Element, insbesondere einer Streuscheibe kann ein zusätzlicher Freiheitsgrad bei der Konstruktion optischer Eigenschaften gewonnen werden.

Die Kombination aus geometrisch-optischer Abbildung der Stufenlinse mit einer dieser überlagerten Streukeule des an der Streuscheibe gestreuten Lichts gestatten es, lichttechnisch hochinteressante Beleuchtungslichtverteilungen zu erreichen. So kann nicht nur das Lichtquellen- oder Leuchtkörperabbild unterdrückt sondern es können bei geeigneter Wahl der streuenden Struktur und deren geometrischer Abmessung sogar Fehler von beleuchtenden Strahlengängen stark gemindert oder vermieden werden.

Eine besonders interessante Anwendung ergibt sich bei Reflektoranordnungen mit einer im Verhältnis zu deren Fassung relativ kleinen Lichtquelle, wie beispielsweise einer Hochdruckentladungslampe, welche Emissionsbereiche in der Grössenordnung einiger Millimeter und deutlich grössere Fassungsdurchmesser aufweisen. Bei derartigen Lichtquellen kann es zu einer Abdunkelung des zentralen Lichtfelds dadurch kommen, dass die durch den Reflektor tretende Fassung eine Öffnung innerhalb des Reflektors benötigt, welche deutlich grösser als die Lichtquelle ist und somit Lichtstrahlen nahe der optischen Achse innerhalb diese Öffnung nicht reflektiert werden können. Durch geeignete Wahl der Vorwärtsstreukeule der Licht streuenden Einrichtung, vorzugsweise einer kreisförmigen zentralen Streuscheibe, können in überraschender Weise im Wesentlichen die geometrisch optischen Eigenschaften der Stufenlinse erhalten und kann dennoch ein zentraler Intensitätsabfall vermieden werden.

In vorteilhafter Weise ist dabei die optische Anordnung einstückig ausgebildet, um sowohl die Stufenlinse als auch die Streuscheibe in einem einzigen Prägevorgang fertigungstechnisch günstig zu erzeugen.

Bevorzugt ist die Stufenlinse eine asphärische Linse, um Kugelgestaltfehler zu kompensieren und zu einer möglichst guten Abbildungsleistung zu gelangen.

Falls die Stufenlinse einen Grundkörper mit einer optisch strahlformend wirksamen, im Wesentlichen konkaven Oberfläche aufweist, kann dergestalt komplexeren optischen Anforderungen Rechnung getragen werden, da hierdurch beispielsweise konkav-konvexe oder bikonkave Linsen definiert werden können, bei welchen die Stufenlinse und auch deren Grundkörper geometrisch-optisch wirksam werden.

Ferner kann die Stufenlinse einen Grundkörper mit einer im Wesentlichen konvexen Oberfläche aufweisen, um somit konvex-konkave oder bikonvexe Linsen zu schaffen.

Näherungsweise kann die Form des Grundkörpers eigenständig optisch strahlformend genutzt werden und können die strahlformenden Eigenschaften der Stufenlinse in Kombination oder überlagert genutzt werden.

Hierbei wird als Grundkörper der Stufenlinse derjenige Teil verstanden, welcher sich ergäbe, wenn von der Stufenlinse deren Stufen entfernt würden, dies bedeutet das Volumenmaterial, auf welchem die Stufen der Stufenlinse aufgebracht oder in welches diese Stufen eingeprägt sind.

Es ist somit fertigungstechnisch möglich, zunächst die Form der erwünschten Stufenlinse zu berechnen und zusätzliche optische strahlformende Eigenschaften durch die weiter Ausgestaltung' des Grundkörpers, vorzugsweise in plankonkaver, plankonvexer, bikonkaver, bikonvexer oder konkav-konvexer Form, zu erlangen.

Wenn die im Wesentlichen ringförmigen, optisch wirksamen Oberflächen der Stufen als Kreisbogenoberflächenabschnitte gestaltet sind, können fertigungstechnisch einfach zu realisierende Geometrien genutzt werden, welche dennoch optisch noch relativ gute Eigenschaften aufweisen.

Bei einer einfachen, kostengünstigen Ausführungsform sind die im Wesentlichen ringförmigen, optisch wirksamen Oberflächen der Stufen kegelmantelförmig ausgebildet.

Das Optimum optischer Abbildungsleistung wird jedoch im Wesentlichen bei einer sammelnden Stufenlinse, somit einer Linse mit positiver Brennweite und reellem Brennpunkt, erreicht, wenn die im Wesentlichen ringförmigen, optisch wirksamen Oberflächen der jeweiligen Stufen so geformt sind, dass eine in etwa ebene Welle mit zur optischen Achse senkrechten Phasenfronten die Linse dann verlässt, wenn in diese Licht eintritt, welches aus einem einzigen reellen Brennpunkt stammt. Im Fall einer streuenden Linse, somit einer Linse mit negativer Brennweite und virtuellem Brennpunkt, wird das Optimum dann erreicht, wenn das Licht einer ebenen Welle, welches in die Stufenlinse eintritt in eine Kugelwelle umgeformt wird, deren Mittelpunkt aus einem einzigen virtuellen Brennpunkt zu stammen scheint.

Bei einer besonders bevorzugten Ausführungsform ist die Streuscheibe nur in einem mittleren Bereich der Stufenlinse und vorzugsweise auf der Seite der Stufen angeordnet, da diese Ausführungsform bereits mit einem einzigen Heissformungsschritt mit hoher Präzision herstellbar ist.

Sehr vorteilhaft ist es, wenn die Streuscheibe in einem mittigen Bereich der Stufenlinse abgegrenzt angeordnet ist, denn dann kann hierdurch eine überraschend variable Intensitätsverteilung bei lichttechnischen Beleuchtungseinrichtungen erzeugt werden. So kann beispielsweise durch Verwendung von Blenden oder durch eine geänderte Fokussierung des eintretenden Lichtfelds dessen Durchmesser variiert und ein variabel einstellbarer Übergang von gestreutem zu geometrisch-optisch abgebildetem Licht geschaffen werden. Solange nur Licht die innere Streuscheibe trifft, definieren deren Eigenschaften die Form des austretenden und beleuchtenden Lichtfelds. Wenn bei Vergrösserung des Durchmessers des Lichtfelds zunehmend geometisch-optische Abbildungseigenschaften hinzutreten, kann beispielsweise eine sehr gleichmässige Vergrösserung des beleuchtenden Lichtkegels erreicht werden.

Ein noch stetigerer und weicherer Übergang der zu ändernden Lichtverteilung kann erreicht werden, wenn das das Licht streuenden Element verschieden stark streuende Bereiche, vorzugsweise einen mittig stärker streuenden und einen randseitig weniger stark streuenden Bereich aufweist.

Bevorzugt wird die Streuscheibe je nach deren Material an deren Streuverhalten angepasst durch Heissformgebung, insbesondere, Prägen, und/oder Spritzgiessen hergestellt.

Bevorzugte Materialien für die Stufenlinse und/oder die Streuscheibe sind Glas und glakeramische Materialien. Besonders vorteilhaft ist bei Glaskeramiken die hohe Temperaturwechselbeständigkeit.

Ferner kann die optische Anordnung mit Stufenlinse und Streuscheibe aus mehreren Elementen zusammengesetzt, um beispielsweise verschiedene Fertigungsverfahren und deren Vorteile zu nutzen.

So kann eine, insbesondere geprägte Kunststoff-Stufenlinse mit einer aus Glas bestehenden Streuscheibe verbunden werden, wodurch sich ein hybrider Verbund aus Glas und Kunststoff ergibt.

Wenn die Stufenlinse ein Material umfasst mit einem ersten Dispersionsverhalten und eine weitere Linse mit entgegengesetzter Brechkraft, vorzugsweise eine Stufenlinse, mit einem Material mit einem zweiten Dispersionsverhalten, können sogar chromatisch korrigierte oder achromatische Linsensysteme geschaffen werden.

Als optische Weglänge wird im Sinne dieser Beschreibung die Wellenlänge eines zentralen Bereichs des jeweils verwendeten Lichtspektrums angesehen.

Wenn die Stufenlinse eine geprägte Kunststofflinse ist, kann es sehr vorteilhaft sein, wenn diese einen optischen Weglängenunterschied an der jeweiligen Stufe von weniger als etwa 1000 optischen Wellenlängen aufweist, da dann in der Regel eine relativ flache Stufenlinse verwirklicht werden kann, durch welche nur geringe Störungen der geometrisch-optischen Lichtausbreitung hervorgerufen werden.

Ferner kann es bei lokal hohen Lichtintensitäten konstruktionsabhängig sehr sinnvoll sein, nicht wie herkömmlich Gelatinefilter zu verwenden, welche im Bereich starker Lichtintensität, wie beispielsweise in der Nähe von reellen Brennpunkten zügig ausbleichen oder sogar schmelzen und entflammen können sondern beschichtete oder gefärbte Gläser zu verwenden.

Wird somit die Stufenlinse und/oder die Streuscheibe als Filter, insbesondere als UV-, IR- oder farbiges Bandfilter und/oder Konversionsfilter ausgebildet, kann eine sehr viel zuverlässigere und exaktere Filterung des Lichts bereitgestellt werden. Ferner liegt es im Rahmen dieser Ausgestaltung, Sätze von optischen Anordnungen herzustellen, welche, vorzugsweise mit dichroitischen bzw. Interferenz-Filterschichten auf definierte Lichttemperaturen für definierte Lichtquellen abgestimmt sind.

So kann beispielsweise eine definierte Farbverschiebung in Richtung niedrigerer Farbtemperatürwerte einer Hochdruckentladungslampe das Spektrum eines Schwarzkörperstrahlers, wie beispielsweise eine Glühlampe verleihen.

Ferner können spektral dominierende Banden angeregter Entladungslinien definiert gemildert werden und somit eine homogenere spektrale Verteilung erreicht werden.

Zusätzlich können mit derartigen Filteranordnungen für vorgegebene Spektren von Lichtquellen auch Lichtstimmungen in deren spektraler Verteilung simuliert werden, wie beispielsweise Morgenlicht, Abendlicht, Gewitter- oder Unwetterlicht, so dass mit einer einzigen Lichtquelle und einem zugeordneten Satz erfindungsgemässer optischer Anordnungen den meisten Anforderungen im Studio-, Theater-, Film und Architekturbereich genügt werden kann.

Da dichroitische oder Interferenzfilter hohen Strahlungsintensitäten mit grosser spektraler Präzision dauerhaft standhalten, können diese je nach Anwendung nicht nur spektral besser sondern durch deren lange Lebensdauer sogar auch preisgünstiger als herkömmliche Farbfilterfolien sein. Ferner sind raue Umgebungsbedingungen, wie beispielsweise bei der Architekturbeleuchtung oder bei Aussenaufnahmen ein weiterer Grund für den Einsatz derartiger optische Anordnungen.

Besonders vorteilhaft ist es bei Verwendung von Kunststofflinsen und/oder -streuscheiben, wenn diese mit einer mechanischen Kratzschutzschicht beschichtet sind.

Ferner können unerwünschte Reflexionen, insbesondere an den Stufenflächen, nicht nur dazu führen, dass Licht aus dem Hauptlichtstrom verloren geht, sondern es können sich sogar in der Beleuchtungsebene hellere Kreise oder Punkte ausbilden, welche durch eine Antireflexschicht auf diesen Stufenflächen stark gemindert oder sogar unterdrückt werden können.

Die Erfindung wird nachfolgend anhand bevorzugter Ausführungsbeispiele und unter Bezugnahme auf die beigefügten Zeichnungen detaillierter erläutert.

Es zeigen:
- Fig. 1: eine erste Ausführungsform der optischen Anordnung einer Stufenlinse mit einer in etwa mittig angeordneten, im Wesentlichen kreisförmigen Streuscheibe, welche einzelne, zueinander leicht verdrehte Facetten aufweist,
- Fig. 2: eine zweite Ausführungsform der optischen Anordnung einer Stufenlinse mit einer in etwa mittig angeordneten, im Wesentlichen kreisförmigen Streuscheibe, welche Facetten aufweist, die durch ein Monte-Carlo-Verfahren aus deren regelmässiger Lage versetzt wurden,
- Fig. 3: eine dritte Ausführungsform einer Stufenlinse mit einer in etwa mittig angeordneten, im Wesentlichen kreisförmigen Streuscheibe, bei welcher die einzelnen Facetten der Streuscheibe auf einer archimedischen Spirale liegen,
- Fig. 4: einen Querschnitt durch eine Plankonvexlinse mit zentraler Streuscheibe, deren Grundkörper im Wesentlichen Plan und deren Stufenlinse konvex ausgebildet ist,
- Fig. 5: einen Querschnitt durch eine bikonkave Stufenlinsenanordnung, welche geometrischoptische strahlerweiternde oder lichtstreuende Eigenschaften hat und bei welcher sowohl der Grundkörper als auch deren geometrisch-optisch wirksames Stufenlinsensystem im Wesentlichen konkav ausgestaltet ist,
- Fig. 6: eine Ausschnittsvergrösserung eines oberen Abschnitts der Querschnittsdarstellung von Fig. 4,
- Fig. 7: eine Querschnittsdarstellung einer konvexkonkaven Stufenlinsenanordnung, deren Grundkörper konkav und deren geometrisch-optisch wirksames Stufenlinsensystem im Wesentlichen konvex ausgestaltet ist,
- Fig. 8: eine Querschnittsdarstellung einer Hybridlinsenanordnung aus einer geprägten plankonvexen Kunststoff- Stufenlinsenanordnung, welche an einer aus Glas bestehenden Streuscheibe angebracht ist,
- Fig.9: eine Querschnittsdarstellung eines Hybridlinsen-Achromaten, bei welchem eine aus Glas bestehende Plankonvexlinse mit einer aus Kunststoff oder einem Glas mit anderer Dispersion bestehenden Bikonkav-Stufenlinse verbunden.

### Detaillierte Beschreibung bevorzugter Ausführungsformen

Der Erfindung wird nachfolgend unter Bezugnahme auf bevorzugte Ausführungsformen detaillierter beschrieben.

Bei dieser Beschreibung wird generell angenommen, dass sich in die Linse eintretendes Licht in den Zeichnungen von der linken Seite kommend zur rechten Seite hin ausbreitet.

Ferner werden bei der Beschreibung der verschiedenen Ausführungsformen gleiche Bezugszeichen für gleiche oder im Wesentlichen gleich wirkende Bestandteile der optischen Anordnung 1 verwendet.

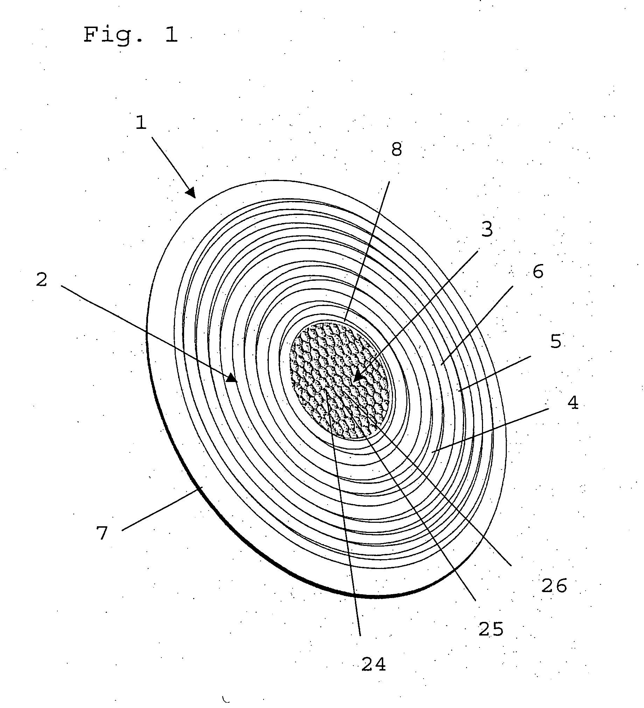

Nachfolgend wird auf Fig. 1 Bezug genommen, welche eine erste Ausführungsform der optischen Anordnung einer Stufenlinse mit einer in etwa mittig angeordneten, im Wesentlichen kreisförmigen Streuscheibe, welche einzelne, zueinander leicht verdrehte Facetten aufweist, zeigt

Die im ganzen mit 1 bezeichnete optische Anordnung umfasst eine Stufenlinse 2, sowie eine in deren mittlerem Bereich angeordnete Streuscheibe 3.

Die Stufenlinse 2 weist konzentrisch angeordnete, ringförmige Stufen mit optische wirksamen Oberflächenbereichen auf, die in Fig. 1 lediglich beispielhaft mit dem Bezugszeichen 4, 5 und 6 versehen sind.

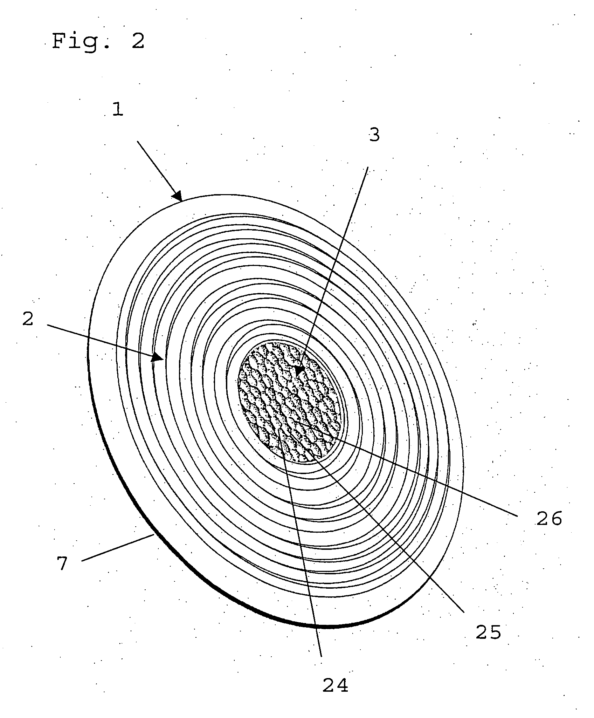

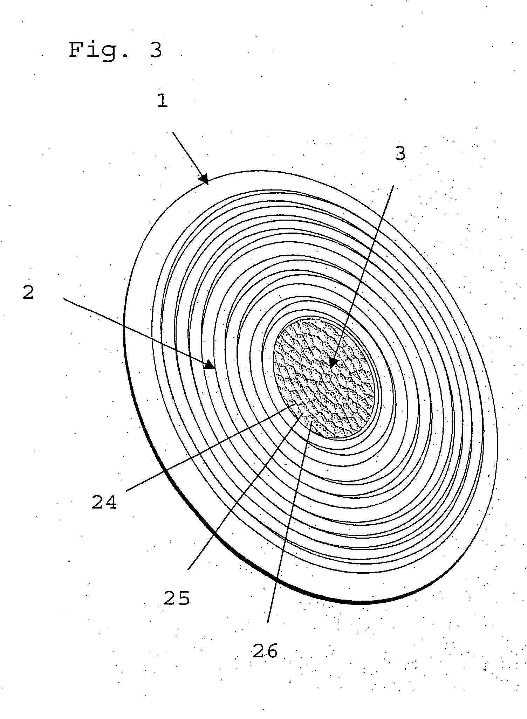

Die in Fig. 1 sowie die in den Figuren 2 und 3 dargestellte Streuscheibe 3 sind beispielhaft Streuscheiben, wie diese in der deutschen Patentanmeldung DE 103 43 630.8 der selben Anmelderin vom 19. September 2003 mit dem Titel "Streuscheibe" beschrieben wird, deren Inhalt durch Bezugnahme voll umfänglich auch zum Inhalt der vorliegenden Offenbarung gemacht wird.

Bei dieser besonders bevorzugten Ausführungsform wird in einem einzigen Heissformungebungsschritt, im Wesentlichen bei einer aus Kunststoff bestehenden Ausführungsform, aus einem im Wesentlichen planen Grundkörper 7 die optischen Anordnung 1 erzeugt.

Nachfolgend werden zunächst nur die Gemeinsamkeiten der in den Fig. 1, 2 und 3 dargestellten optischen Anordnungen 1 beschrieben und werden danach im Detail deren jeweiligen Unterschiede erläutert.

Die kreisförmige Streuscheibe 3 ist auf der Lichtaustrittsseite des Grundkörpers 7 angeordnet und erstreckt sich vollflächig innerhalb des ersten ringförmigen Abschnitts 8, welcher sich klar abgegrenzt, vorzugsweise nahtlos an diese anschliesst.

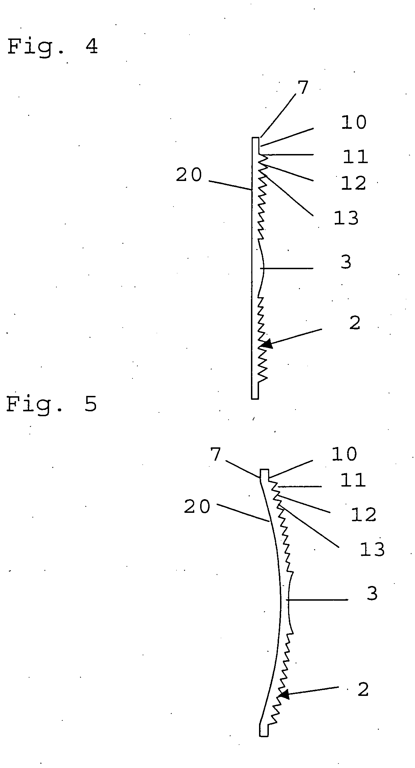

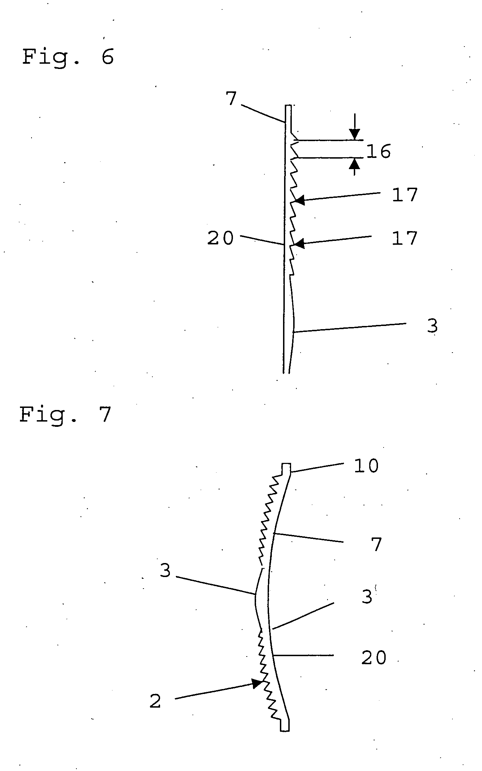

Der Grundkörper 7 ist bei einer Linse mit reellem, rechtsseitigen, somit positivem Brennpunkt vorzugsweise im Bereich der Streuscheibe 3 sowie im Bereich der ringförmigen Oberflächen 4, 5, 6 und 8 konvex oder nach aussen gewölbt geformt, wie dies beispielsweise schematisch in den Querschnittsdarstellungen in Fig. 4 und Fig. 6 gezeigt ist.

Der Grundkörper 7 ist bei einer Linse mit virtuellem oder negativem, linksseitigen Brennpunkt vorzugsweise im Bereich der Streuscheibe 3 sowie im Bereich der ringförmigen Oberflächen 4, 5, 6 und 8 konkav oder nach innen gewölbt geformt, wie dies beispielsweise schematisch in einer Querschnittsdarstellung in Fig. 5 gezeigt ist.

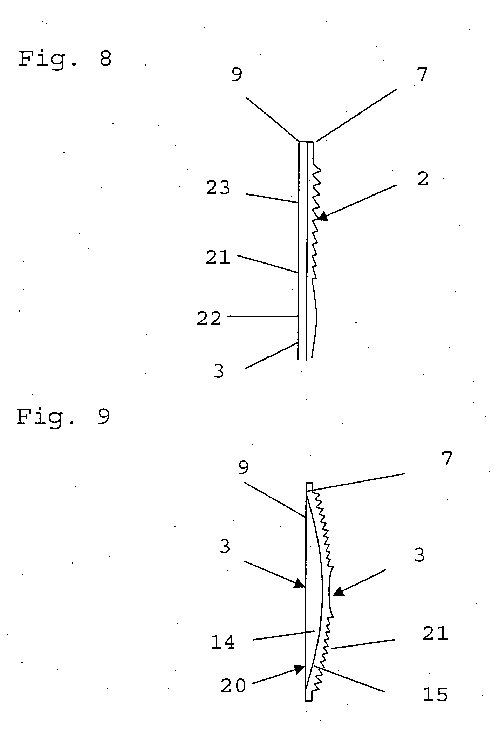

Der Grundkörper 7 kann jedoch, insbesondere bei Verwendung einer Hybridlinse, welche im Querschnitt in den Fig.8 und 9 gezeigt ist, auch zwei- oder mehrstückig ausgebildet sein und umfasst dann sowohl den die Stufenlinse 2 aufweisenden Grundkörperabschnitt 7 auch einen weiteren Grundkörperabschnitt 9, welcher wie in Fig. 8 dargestellt eben beziehungsweise plan oder wie in Fig. 9 dargestellt beispielsweise plankonvex ausgebildet sein kann.

Vorzugsweise ist der Grundkörperabschnitt 9 bei Hybridlinsen aus Glas eines ersten Materials gefertigt und ist der Grundkörperabschnitt 7 aus Glas eines zweiten Materials mit einer anderen Dispersion als derjenigen des Grundkörperabschnitts 9 oder ist aus einem heissformbaren Kunststoff hergestellt.

Nachfolgend wird auf Fig. 4 bezug genommen, welche eine plankonvexe Stufenlinse mit zentraler Streuscheibe 3 zeigt sowie auf Fig. 6, welche ein Detail von Fig. 4 vergrösserter Darstellung wiedergibt.

Bei der in Fig. 4 sowie Fig. 5 dargestellten einstückigen Stufenlinse 2 kann die jeweilige optisch wirksame Oberfläche 11, 12, 13 teil einer asphärischen oder auch einer sphärischen Linse sein und kann die optische Anordnung 1 einen Randbereich 10 aufweisen, welcher zur Halterung in einer zugeorndeten mechanischen Aufnahme planparallel ausgebildet sein kann.

Als Teil einer asphärischen Linse werden die ringförmigen, optisch wirksamen Oberflächen dieser Stufen (beispielsweise 4, 5, 6, 11, 12, 13) so geformt, dass eine in etwa ebene Welle mit zur optischen Achse senkrechten Phasenfronten in einem reellem Brennpunkt vereinigt wird.

Hierbei soll sich die optische Achse durch die Mitte der optischen Anordnung im Wesentlichen senkrecht zu deren Hauptebenen erstrecken.

Im Falle der in Fig. 5 dargestellten bikonkaven Stufenlinse werden die jeweiligen ringförmigen, optisch wirksamen Oberflächen so geformt, dass aus einer von links eintretenden ebenen Welle die Phasenfronten einer Kugelwelle erzeugt werden, deren virtueller Brennpunkt oder deren scheinbarer Ursprung auf der optischen Achse links von der in Fig. 5 dargestellten Stufenlinse 2 zu liegen scheint.

Wobei diese geometrisch-optischen Bedingungen exakt nur für eine Wellenlänge in einem mittleren Wellenlängenbereich des verwendeten Lichtspektrums gelten.

Zur Vereinfachung der Herstellung kann an Stelle komplexer asphärischer ringförmiger Geometrien auch eine asphärische Linse durch sphärische Ringabschnitte angenähert werden.

Hierbei werden möglichst gut angenäherte sphärische Abschnitte, somit Kreisbogenoberflächenabschnitte verwendet, für die jeweiligen Oberflächen der Ringe um zu einer einfacheren Fertigung der nötigen Prägewerkzeuge zu gelangen.

Ein nochmalige Vereinfachung besteht darin, beispielsweise für Stufenlinsen mit einer sehr hohen Anzahl von Stufen und nur kleinen jeweiligen optischen Weglängenunterschieden zwischen Randpunkten benachbarter Stufen, kegelmantelförmige optische Oberflächen zu nutzen, welche dann nur noch in deren Neigung an die mittlere Neigung der Asphäre angepasst werden.

Dabei können die einzelnen ringförmigen Abschnitte und der zentrale kreisförmige Abschnitt der Stufenlinse je nach dem, ob lichtsammelnde oder lichtstreuende Eigenschaften erwünscht sind entweder konkav oder konvex gestaltet sein.

Zur Verdeutlichung der äusserst variablen Einsetzbarkeit der erfindungsgemässen Konzepte ist in Fig. 5 eine bikonkave Stufenlinse, ist in Fig. 7 eine konvexkonkave Linse und sind in Fig. 8 und Fig. 9 Hybridlinsen gezeigt, von welchen die in Fig. 9 dargestellte Linse chromatisch korrigierte Eigenschaften aufweist.

Nachfolgend wird auf die in Fig. 9 dargestellte Hybridlinse bezug genommen, bei welcher eine plankonvexe Glaslinse 14 mit einem reellen Brennpunkt auf der rechten Seite der Linse 14 mit einer konkavkonvexen streuenden Stufenlinse 15 verbunden ist.

Die jeweiligen Brechkräfte oder Brennweiten sowie die Brechungsidizes der beiden Linsen 14 und 15 sind insgesamt so gewählt, dass sich noch eine sammelnde Wirkung ergibt. Dies bedeutet es ergibt sich insgesamt eine Sammellinse mit einem nach rechts verschobenen Brennpunkt.

Hierbei ist das Material der Stufenlinse 15 jedoch so gewählt, dass die Wirkung von dessen Dispersion in der gesamten Anordnung der Wirkung der Dispersion der plankonvex Linse 14 entgegen verläuft, so dass sich insgesamt geringere chromatische Aberrationen für dieses Linsensystem ergeben.

In alternativer Ausgestaltung kann die Stufenlinse 15 auch aus einem geprägtem Kunststoff bestehen, welcher auf die Linse 14 auflaminiert wird. Diese Kunststofflinse 15 kann mit einer Kratzschutzschicht 21 versehen sein.

Werden geprägte Glaslinsen verwendet, beträgt der optische Weglängenunterschied im Bereich der jeweiligen Stufe vorzugsweise mehr als 100 optische Wellenlängen.

Bei Verwendung von geprägten Kunststoff-Stufenlinsen wird vorzugsweise ein optischer Weglängenunterschied an der jeweiligen Stufe von weniger als etwa 1000 optischen Wellenlängen bevorzugt.

Ferner können die um den zentralen kreisförmigen Abschnitt der Stufenlinse angeordneten ringförmigen Abschnitte im Wesentlichen die gleiche radiale Erstreckung 16, dies bedeutet die gleiche Stufenbreite 16 aufweisen, siehe insbesondere Fig. 6. Hierbei kommt es folglich zu unterschiedlich hohen Stufen, da sich typischerweise die Neigungswinkel der jeweiligen ringförmigen, optisch aktiven Oberflächenabschnitte mit zunehmendem Abstand zur Mitte verändern.

Alternativ kann, um fertigungstechnisch hohe Präzision bei schwierig zu formenden Materialien zu erreichen, die Höhe 17 der optisch wirksamen Oberflächenabschnitte konstant gehalten werden, so dass sich hierdurch Ringe mit verschieden grosser Breite ergeben, siehe insbesondere Fig. 6.

Ferner kann die Stufenlinse 2 und/oder die Streuscheibe 3 als Filter ausgebildet werden, insbesondere als UV- IRoder farbiges Bandfilter und/oder als Konversionsfilter ausgebildet sein.

Besonders vorteilhaft ist es, wenn hierzu eine Seite, wie Beispiel in Fig. 9 beispielhaft auf der linken Seite der Plankovexlinse 14 dargestellt eine Interferenzfilterschicht 20 aufgebracht ist.

Dieses Interferenzfilterschichtsystem kann alternativ auch zur Verschiebung der Farbtemperatur oder zur Kompensation von spektralen Linien verwendet werden.

Besonders vorteilhaft ist es ferner, wenn zumindest die jeweils einer Lichtquelle zugewandte Oberfläche der optischen Anordnung 1 aus Glas besteht und vorgespannt, vorzugsweise thermisch vorgespannt ist, da hierdurch eine deutlich erhöhte thermische Beständigkeit erreicht wird.

Es kann die Streuscheibe 3 generell sowohl auf der linken, - somit der Lichteintrittsseite als auch auf der rechten, somit der Lichtaustrittsseite der optischen Anordnung 1 angeordnet sein.

Ferner ist es möglich, wie in Fig. 7 lediglich schematisch dargestellt, sowohl auf der Lichteintritts- als auch auf Lichtaustrittsseite jeweils eine Streuscheibe 3 anzuordnen, so dass sich deren streuende Wirkung definiert überlagert.

Ferner kann die Streuscheibe 3 statt einer scharfen radialen Berandung auch verschieden stark streuende Bereiche aufweisen, beispielsweise einen mittig stärker streuenden Bereich und einen, vorzugsweise stetig auslaufenden randseitig weniger stark streuenden Bereich aufweisen.

Hierzu kann die Streuscheibe beispielsweise eine definierte Körnung aufweisen, welche in einem mittleren Bereich 22 eine feinere Körnungsstruktur und mit zunehmender radialer Entfernung in einem randseitigen Bereich 23 eine grobere Körnungsstruktur umfasst, siehe diesen Sachverhalt schematisch dargestellt auch Fig. 8.

Bei den nachfolgend beschriebenen Ausführungsformen von alternativ zu einfachen Körnungen oder mattierten Bereichen verwendbaren Streuscheiben 3 besteht der neue Ansatz unter anderem darin, von der regelmässigen Anordnung von Facetten einer regelmässigen Streuscheibe abzuweichen.

Dies geschieht bei einer ersten, in Fig. 1 dargestellten Ausführungsform dadurch, dass eine Streuscheibe 3 bereitgestellt wird, die einen transparenten Grundkörper 7, 9 aufweist, wobei die optisch wirksame Oberfläche der Streuscheibe 3 in Facetten 24, 25, 26, welche nur beispielhaft mit Bezugszeichen versehen sind, unterteilt ist, und wobei jeder Facette 24, 25, 26 eine Erhebung oder Vertiefung mit einer zweiten, gewölbt ausgebildeten Oberfläche zugeordnet ist und die Facetten 24, 25, 26 relativ zu einander verdreht angeordnet sind oder unterschiedliche geometrische Formen annehmen.

Unter einer Facette soll hierbei eine Fläche verstanden werden, die von der Randkontur der jeweiligen geometrischen Form aufgespannt wird. Je nach Ausbildung der ersten Oberfläche, d.h. der Oberfläche des Grundkörpers 7 der Streuscheibe 3, als ebene oder gewölbte Fläche kann die Facette 24, 25, 26, welche durch die geometrischen Formen aufgespannt wird, ebenfalls eben oder gewölbt sein.

Die der Facette 24, 25, 26 zugeordneten Erhebung oder Vertiefung stellt ein Element der Streuscheibe 3 dar. Die Erhebung oder Vertiefung besitzt die Facette 24, 25, 26 als Grundfläche und befindet sich zumindest im Wesentlichen oberhalb oder unterhalb dieser Grundfläche. Die Erhebung oder Vertiefung kann im Beleuchtungsfall als Linse wirken.

Durch diese Lösung kommt es zu einer Superposition einer Vielzahl unterschiedlich konturierter Lichtfelder und damit wunschgemäss zu einem runden Lichtfeld.

Abhängig von der jeweiligen Facettenkonfiguration und der Beschaffenheit der den Facetten zugeordneten Erhebungen oder Vertiefungen lässt sich ein Lichtfeld mit einem wählbaren Gradienten der Beleuchtungsstärke bereitstellen, bzw. ein solches das vorgebbar weich oder hart ausläuft.

Ein weich auslaufendes Lichtfeld ist ein solches mit einem geringen Gradienten der Beleuchtungsstärke zum Rand des Lichtfeldes hin. Umgekehrt führt ein starker Gradient der Beleuchtungsstärke am Rand des Lichtfeldes zu einem hart auslaufenden Lichtfeld. Ein weiterer erzielter Vorteil besteht darin, dass mit dieser Facettenkonfiguration randseitige Verfärbungen beim Einsatz von Entladungslampen vermieden werden können.

Um die Unterschiedlichkeit der einzelnen zur Superposition beitragenden Lichtfelder zu erhöhen und darüber die oben genannten Vorteile zu erzielen, können verschiedene Massnahmen ergriffen werden.

So kann vorgesehen sein, dass die Facetten eine polygonale Randkontur aufweisen. Hierbei ist die Eckenzahl der Polygone variabel.

Die Facetten mit polygonaler Randkontur sollten die Oberfläche vollständig bedecken, da ansonsten lokal keine Streuwirkung gegeben ist.

Weiterhin können auch Streuscheiben bereitgestellt werden, bei denen die Facetten 24, 25, 26 unterschiedliche Flächeninhalte aufweisen, wie dies beispielhaft in Fig. 2 dargestellt ist.

Als Polygone können Drei-, Vier-, Fünf-, Sechs- und/oder Sieben-Ecke gewählt werden. Die Verbindungsstrecken zwischen benachbarten Ecken der Polygone können gerade oder gebogene Linien sein.

Als weitere Folge der Unregelmässigkeit der Facetten ergibt sich, dass diese unterschiedliche Orientierungen aufweisen.

Eine weitere Massnahme, mit der man sich dem Ziel runder Lichtfelder, und hinsichtlich der Beleuchtungsstärke zum Rand hin weich oder hart auslaufender Lichtfelder nähert, ist die Wahl und ggf. Variation der jeweiligen Wölbung der Erhebungen oder Vertiefungen. Die Wölbung
kann sphärisch sein, und die Erhebung bzw. Vertiefung entsprechend kalottenförmig ausgebildet sein. Alternativ kann die Wölbung asphärisch gewählt werden. Weiterhin besteht zur Gewährleistung des o.g. Ziels die Möglichkeit, die Tiefe der Ausnehmungen bzw. die Höhe der Erhebungen zu variieren.

Aus den vorstehenden Ausführungen ergibt sich, dass die aufgeführten Massnahmen alternativ oder kumulativ vorgesehen werden können. Zur praktischen Umsetzung der vorstehend genannten Lösung ist in einer ersten Lösungsvariante eine Streuscheibe vorgesehen, die einen transparenten Grundkörper mit einer ersten Oberfläche aufweist, wobei die erste Oberfläche in Facetten unterteilt ist, und bei der jeder Facette eine Erhebung oder Vertiefung mit einer zweiten, gewölbt ausgebildeten Oberfläche zugeordnet ist, und bei dem die Scheitelpunkte S der Erhebungen oder Vertiefungen entlang einer Spirale angeordnet sind.

Der Scheitelpunkt S der Erhebung oder Vertiefung sei definiert als Schnittpunkt der durch den Facettenschwerpunkt hindurchtretenden
Oberflächennormale der Facette mit der gewölbten Oberfläche der Erhebung oder Vertiefung.

Sind bei zwei benachbarten Facetten die Erhebung der Radius und/oder die Tiefe der Erhebung oder Vertiefung unterschiedlich, so ist im allgemeinen der gemeinsame Rand gekrümmt, und es ergeben sich für die Vertiefungen Ränder die in einer Aufsicht unterschiedliche geometrische Formen annehmen.

Durch die Anordnung der Scheitelpunkte S entlang einer Spirale entsteht eine Vielzahl von unregelmässig angeordneten Facetten, mit welchen wunschgemäss ein rundes Lichtfeld geschaffen wird, welches bei Entladungslampen im Randbereich keine Verfärbungen aüfweist, und dessen Gradient der Beleuchtungsstärke vorgegeben werden kann.

Die Höhe der Erhebungen bzw. Vertiefungen kann über die Streuscheibe 3 hinweg variiert werden, so dass die Erhebungen und Vertiefungen unterschiedlich hoch bzw. tief ausfallen. Auch dies trägt zum Ziel bei, ein rundes und mehr oder weniger weich oder hart auslaufendes Lichtfeld bereitzustellen.

In einer in Fig. 3 dargestellten Ausgestaltung der Streuscheibe 3 befinden sich die Scheitelpunkte S der Facetten 24, 25, 26 im Wesentlichen auf einer Archimedischen Spirale.

Die einzelnen Punkte erhält man durch fortgesetztes Abtragen einer konstanten Bogenlänge L längs der Spirale von innen nach aussen. Die Scheitelpunkte können äquidistant zueinander angeordnet sein. Neben der äquidistanten Anordnung der Scheitelpunkte ist auch eine variable Bogenlänge L möglich. So kann eine von innen nach aussen zunehmende Bogenlänge L gewählt werden. Auf diese Weise erhält man im Inneren der Streuscheibe kleine Facetten mit Erhebungen geringer Höhe bzw. mit Vertiefungen geringer Tiefe, und somit eine kleine Streuwirkung. Zum Rand hin werden die Facetten grösser, die Höhe der Erhebungen bzw. die Tiefe der Vertiefungen wird grösser und die Streuwirkung wird ebenfalls grösser. Das Lichtfeld weist dann einen eher kleinen Halbstreuwinkel mit recht grosser Beleuchtungsstärke im Zentrum auf. Im Gegensatz hierzu wäre bei konstantem L die Beleuchtungsstärke eher plateauförmig und weich auslaufend.

Die vorstehend genannten Massnahmen, welche alternativ und ggf. kumulativ ergriffen werden können, erlauben es, auf vielfältige Weise, die Streuscheibe 3 an das jeweilige Beleuchtungssystem, zum Beispiel den jeweiligen Reflektor, anzupassen.

So kann durch die Wahl des Spiralentyps, des Werts der Bogenlänge L, aber auch durch Variation oder Konstanz der Bogenlänge eine Anpassung an einen Reflektor erfolgen. Diese Massnahmen ermöglichen es, das Lichtfeld in vorgegebenen Bereichen des Beleuchtungssystems zu beeinflussen, es lokal zu verstärken oder zu schwächen, und erlauben somit auf vielfältige Weise, das Lichtfeld zu optimieren.

Aus den vorstehenden Ausführungen ergibt sich, dass dem Fachmann mit den Lösungsvarianten eine Fülle von Parametern an die Hand gegeben wird, wie er das Lichtfeld unter Berücksichtigung des Beleuchtungssystems gestalten und anpassen kann. Insofern erlaubt der gewählte Ansatz der unterschiedlichen geometrischen Formen für die Facetten eine sehr vielfältige und variable Anpassung des Lichtfeldes an die jeweiligen Verhältnisse.

Beispielhaft zeigen die Figuren 1 und 2 weitere bevorzugte Ausführungsformen. In Fig. 1 ist eine erste Ausführungsform der optischen Anordnung einer Stufenlinse mit einer in etwa mittig angeordneten, im Wesentlichen kreisförmigen Streuscheibe, welche einzelne, zueinander leicht verdrehte Facetten aufweist, dargestellt und Fig. 2 zeigt eine zweite Ausführungsform der optischen Anordnung einer Stufenlinse mit einer in etwa mittig angeordneten, im Wesentlichen kreisförmigen Streuscheibe, welche Facetten aufweist, die durch ein Monte-Carlo-Verfahren aus deren regelmässiger Lage versetzt wurden.

Es tritt hinzu, dass zur Realisierung eines wunschgemässen Lichtfeldes oder eines wunschgemässen vordefinierten Streuverhaltens auch mehrere Möglichkeiten offen stehen, die sich im Design unterscheiden. Insofern erlauben es die Lösungsvarianten auch, hinsichtlich des ästhetischen Erscheinungsbildes optimierte Streuscheiben bereitzustellen. Es kann für die Facette beispielsweise ein Rautenmuster oder die Form eines Hahnentritts verwendet werden.

Ferner ist es im Rahmen der Erfindung auch möglich, nichtkoaxiale oder nichtkonzeritrische Anordnungen der Streuscheibe zu verwenden.

### Bezugszeichenliste

- 1: optische Anordnung
- 2: Stufenlinse
- 3: Streuscheibe
- 4: ringförmige, konzentrische im Wesentlichen optisch wirksame Oberflächenabschnitte
- 5: dto.
- 6: dto.
- 7: Grundkörper(abschnitt)
- 8: wie 4bis 6
- 9: Grundkörperabschnitt der mehrteiligen Anordnung
- 10: planparalleler Randbereich
- 11: optisch wirksame Oberfläche
- 12: dto.
- 13: dto.
- 14: Plankonvexlinse aus Vollmaterial
- 15: konvex-konkave Stufenlinse
- 16: radiale Erstreckung der optisch wirksamen Oberflächenabschitte, Breite
- 17: Höhe der optisch wirksamen Oberflächenabschnitte
- 18: Antireflexschicht
- 19: Kratzschutzschicht
- 20: Interferenzfilterschicht
- 21: Kratzschutzschicht
- 22: mittiger, stärker streuender Bereich
- 23: randseitiger, weniger stark streuender Bereich'
- 24: Facette
- 25: dto.
- 26: dto.

## Patentansprüche

1. Optische Anordnung umfassend eine Stufenlinse **gekennzeichnet durch**
ein Licht streuendes Element, insbesondere eine Streuscheibe.

2. Optische Anordnung nach einem der vorstehenden Ansprüche, **dadurch gekennzeichnet, dass** die Streuscheibe nur in einem mittleren und/oder mittigen Bereich der Stufenlinse angeordnet ist.

3. Optische Anordnung nach Anspruch 1 oder 2, **dadurch gekennzeichnet, dass** die Streuscheibe kreisförmig ist.

4. Optische Anordnung nach einem der vorstehenden Ansprüche, **dadurch gekennzeichnet, dass** die Streuscheibe an der Lichtaustrittsfläche angeordnet ist.

5. Optische Anordnung nach einem der vorstehenden Ansprüche von 1 bis 15, **dadurch gekennzeichnet, dass** die Streuscheibe an der Lichteintrittsfläche angeordnet ist.

6. Optische Anordnung nach einem der vorstehenden Ansprüche von 1 bis 15, **dadurch gekennzeichnet, dass** jeweils eine Streuscheibe an der Lichteintrittsfläche und an der Lichtaustrittsfläche angeordnet ist.

7. Optische Anordnung nach einem der vorstehenden Ansprüche, **dadurch gekennzeichnet, dass** das Licht streuenden Element verschieden stark streuende Bereiche aufweist, vorzugsweise einen mittig stärker streuenden und einen randseitig weniger stark streuenden Bereich aufweist.

8. Optische Anordnung nach einem der vorstehenden Ansprüche, **dadurch gekennzeichnet, dass** die Streuscheibe mattiert und/oder durch Heissformgebung, insbesondere Prägen und/oder spritzgusstechnisch, hergestellt ist.

9. Optische Anordnung nach einem der vorstehenden Ansprüche, **dadurch gekennzeichnet, dass** das Material der Stufenlinse und/oder der Streuscheibe Glas umfasst.

10. Optische Anordnung nach einem der vorstehenden Ansprüche, **dadurch gekennzeichnet, dass** das Material der Stufenlinse und/oder der Streuscheibe glaskeramisches Material umfasst, insbesondere aus glaskeramischem Material besteht.

11. Optische Anordnung nach einem der vorstehenden Ansprüche, **dadurch gekennzeichnet, dass** die optische Anordnung einstückig ausgebildet ist.

12. Optische Anordnung nach einem der vorstehenden Ansprüche, **dadurch gekennzeichnet, dass** die Stufenlinse eine asphärische Linse ist.

13. Optische Anordnung nach einem der Ansprüche von 1 bis 11, **dadurch gekennzeichnet, dass** die Stufenlinse eine sphärische Linse ist.

14. Optische Anordnung nach einem der vorstehenden Ansprüche, **dadurch gekennzeichnet, dass** die Stufenlinse einen Grundkörper mit einer im Wesentlichen planen Oberfläche aufweist.

15. Optische Anordnung nach einem der vorstehenden Ansprüche von 1 bis 13, **dadurch gekennzeichnet, dass** die Stufenlinse einen optisch strahlformend wirksamen Grundkörper mit einer im Wesentlichen konkaven sphärischen oder asphärischen Oberfläche aufweist.

16. Optische Anordnung nach einem der vorstehenden Ansprüche von 1 bis 13, **dadurch gekennzeichnet, dass** die Stufenlinse einen optisch strahlformend wirksamen Grundkörper mit einer im Wesentlichen konvexen sphärischen oder asphärischen Oberfläche aufweist.

17. Optische Anordnung nach einem der vorstehenden Ansprüche, **dadurch gekennzeichnet, dass** die im Wesentlichen ringförmigen, optisch wirksamen Oberflächen der Stufen als Kreisbogenabschnitte gestaltet sind.

18. Optische Anordnung nach einem der vorstehenden Ansprüche von 1 bis 16, **dadurch gekennzeichnet, dass** die im Wesentlichen ringförmigen, optisch wirksamen Oberflächen der Stufen kegelmantelförmig ausgebildet sind.

19. Optische Anordnung nach einem der vorstehenden Ansprüche von 1 bis 16, **dadurch gekennzeichnet, dass** die im Wesentlichen ringförmigen, optisch wirksamen Oberflächen der jeweiligen Stufen so geformt sind, dass eine in etwa ebene Welle mit zur optischen Achse senkrechten Phasenfronten in einem reellen Brennpunkt vereinigt wird oder in eine Kugelwelle umgeformt wird, deren Mittelpunkt in einem virtuellen Brennpunkt zu liegen scheint.

20. Optische Anordnung nach einem der vorstehenden Ansprüche, **dadurch gekennzeichnet, dass** das Material der Stufenlinse und/oder der Streuscheibe Kunststoff umfasst.

21. Optische Anordnung nach einem der vorstehenden Ansprüche, **dadurch gekennzeichnet, dass** die optische Anordnung mit Stufenlinse und Streuscheibe aus mehreren Elementen zusammengesetzt ist.

22. Optische Anordnung nach einem der vorstehenden Ansprüche, **dadurch gekennzeichnet, dass** die optische Anordnung eine hybrider Verbund aus Glas und Kunststoff ist.

23. Optische Anordnung nach einem der vorstehenden Ansprüche, **dadurch gekennzeichnet, dass** die Stufenlinse ein Material umfasst mit einem ersten Dispersionsverhalten und eine weitere Linse mit entgegengesetzter Brechkraft, vorzugsweise eine Stufenlinse mit einem Material mit einem zweiten Dispersionsverhalten derart vorgesehen ist, dass chromatische Aberrationen vermindert sind.

24. Optische Anordnung nach einem der vorstehenden Ansprüche, **dadurch gekennzeichnet, dass** die Stufenlinse eine geprägte Linse, insbesondere eine Kunststofflinse ist, vorzugsweise mit einem optischen Weglängenunterschied an der jeweiligen Stufe von weniger als etwa 1000 optischen Wellenlängen.

25. Optische Anordnung nach einem der vorstehenden Ansprüche, **dadurch gekennzeichnet, dass** die Stufenlinse auf einer ersten Seite und die Streuscheibe auf einer der ersten Seite gegenüberliegenden Seite ausgebildet oder angeordnet ist.

26. Optische Anordnung nach einem der vorstehenden Ansprüche, **dadurch gekennzeichnet, dass** die um den zentralen kreisförmigen Abschnitt der Stufenlinse angeordneten ringförmigen Abschnitte im Wesentlichen die gleiche radiale Erstreckung aufweisen.

27. Optische Anordnung nach einem der Ansprüche von 1 bis 26, **dadurch gekennzeichnet, dass** die stufenförmigen Erhebung zumindest zweier benachbarter ringförmiger Abschnitte im Wesentlichen die gleiche Höhe haben.

28. Optische Anordnung nach einem der vorstehenden Ansprüche, **dadurch gekennzeichnet, dass** zumindest die der Lichtquelle zugewandte Oberfläche der optischen Anordnung aus Glas besteht und vorgespannt, vorzugsweise thermisch vorgespannt ist.

29. Optische Anordnung nach einem der vorstehenden Ansprüche, **dadurch gekennzeichnet, dass** die Stufenlinse und/oder die Streuscheibe als Filter, insbesondere als UV-, IR- oder farbiges Bandfilter und/oder Konversionsfilter ausgebildet ist/sind.

30. Optische Anordnung nach einem der vorstehenden Ansprüche, **dadurch gekennzeichnet, dass** die Stufenlinse und/oder die Streuscheibe mit einer mechanischen Kratzschutzschicht und/oder einer Antireflexschicht beschichtet sind.

31. Streuscheibe für eine optische Anordnung nach einem der vorstehenden Ansprüche, welche eine erste Oberfläche aufweist, die in Facetten unterteilt ist, und bei der jeder Facette eine Erhebung oder Vertiefung mit einer zweiten, gewölbt ausgebildeten Oberfläche zugeordnet ist, welche **dadurch gekennzeichnet ist, dass** die Facetten unterschiedliche geometrische Formen annehmen.

32. Streuscheibe nach Anspruch 31 welche, **dadurch gekennzeichnet ist, dass** die Facetten eine polygonale Randkontur aufweisen.

33. Streuscheibe nach Anspruch 31, welche **dadurch gekennzeichnet ist, dass** die Facetten unterschiedliche Flächeninhalte aufweisen.

34. Streuscheibe nach Anspruch 31, 32 oder 33, welche **dadurch gekennzeichnet ist, dass** die Facetten die Form eines Drei-, Vier-, Fünf-, Sechs- und/oder Sieben-Ecks annehmen.

35. Streuscheibe nach einem der Ansprüche 31 bis 34, **dadurch gekennzeichnet, dass** die Facetten unterschiedliche Orientierungen aufweisen.

36. Streuscheibe nach einem der Ansprüche 31 bis 35, **dadurch gekennzeichnet, dass** die Erhebungen oder Vertiefungen kalottenförmig ausgebildet sind.

37. Streuscheibe nach einem der Ansprüche 31 bis 36, **dadurch gekennzeichnet, dass** die Höhe der Erhebungen und/oder die Tiefe der Vertiefungen unterschiedlich gewählt sind.

38. Streuscheibe nach dem Oberbegriff von Anspruch 31, **dadurch gekennzeichnet, dass** die jeweiligen Scheitelpunkte (S) der Erhebungen oder Vertiefungen entlang einer Spirale angeordnet sind.

39. Streuscheibe nach Anspruch 38, **dadurch gekennzeichnet, dass** die Scheitelpunkte (S) auf einer Archimedischen Spirale angeordnet sind.

40. Streuscheibe nach Anspruch 38 oder 39, **dadurch gekennzeichnet, dass** die Bogenlänge (L) zwischen zwei benachbarten Scheitelpunkten (S) entlang der Spirale nahezu äquidistant ist.

41. Streuscheibe nach Anspruch 38 oder 39, **dadurch gekennzeichnet, dass** die Bogenlänge (L) zwischen zwei benachbarten Scheitelpunkten (S) entlang der Spirale variabel gestaltet ist.

42. Streuscheibe nach einem der Ansprüche 38 bis 41, **dadurch gekennzeichnet, dass** die Höhe der Erhebungen und/oder die Tiefe der Vertiefungen unterschiedlich gewählt sind.

43. Streuscheibe nach dem Oberbegriff von Anspruch 31, **dadurch gekennzeichnet, dass** die Streuscheibe, einzelne relativ zueinander verdrehte Facetten aufweist.

44. Streuscheibe nach dem Oberbegriff von Anspruch 31, **dadurch gekennzeichnet, dass** die Streuscheibe Facetten aufweist, die durch ein Monte-Carlo-Verfahren aus deren regelmässiger Lage versetzt sind.

45. Streuscheibe für eine optische Anordnung nach einem der vorstehenden Ansprüche von 1 bis 31, **dadurch gekennzeichnet, dass** die Streuscheibe eine definierte Körnung aufweist, welche in einem mittleren Bereich feiner und mit zunehmender Entfernung von der Mitte grober wird.
